# EUROPEAN PATENT SPECIFICATION

(11) **EP 0 480 103 B1**
(45) Date of publication and mention of the grant of the patent: **14.12.1994**
(21) Application number: 90311074.0
(22) Date of filing: 10.10.1990
(51) Int. Cl.: F16B 33/06

(54) **Coating of screws**
Schraubenbeschichtung
Revêtement pour vis

(43) Date of publication of application: 15.04.1992
(73) Proprietor: ITW Limited, Windsor Berkshire SL4 3BD (GB)
(72) Inventor: Day, Robert Henry, Binfield, Bracknell, Berkshire (GB)
(74) Representative: Rackham, Stephen Neil

(56) References cited:
- FR-A- 1 486 725
- GB-A- 531 497
- US-A- 3 779 785
- US-A- 4 428 982
- US-A- 4 545 712

## Description

Many modern industrial buildings are constructed by first building a strong steel framework and then cladding it with thin profiled metal sheets to form the walls and roof.

It is common practice to add insulation material to the walls and roof to conserve energy and to help to maintain a comfortable environment within the building. This added insulation is usually sandwiched between the roof and walls and the framework as they are connected to the framework by using self-drilling, self-tapping screw-threaded fasteners. A typical building has many thousands of such fasteners.

Inside an air-conditioned building there is usually a small positive pressure which forces warm moist air from inside the building along the screw threads into wall and roof voids and into the insulation material. The temperature outside the roof void and the temperature gradient within the roof void vary according to location, time of year and time of day but, frequently the void will be cooler than the inside of the building.

The warm air from the building cools in the roof and wall voids and moisture condenses. This condensation typically reacts with chemicals present in the insulation material to form an acid which subsequently attacks the fastenings. This attack can lead to very severe corrosive deterioration of the fastening and its immediate surroundings. Alternatively, condensation can accumulate and saturate the insulation to reduce its thermal efficiency. In the most severe cases, the condensation runs back into the building to give the impression of roof leakage.

Corrosion is a frequent cause for concern in mechanical fixings, particularly corrosion caused by the use of dissimilar metals which are widely used in the metal building construction industry. The most severe situation occurs when a conducting electrolyte, e.g. acidified water, accumulates at a junction between the fastening and the metal framework or profiled sheet. The resulting corrosion is caused by a galvanic reaction between the dissimilar metals.

A present a cadmium coating is often applied and this acts as both an anti-corrosion coating and as a solid lubricant. However, this is not preferred from a pollution stand point and therefore a zinc anti-corrosion coating is preferred. This however tends to ball up and jam the drilling and self-tapping effect of a fastener.

To overcome the problems of corrosion we have coated a proportion of the screw threads, and sometimes the drill point, of such a fastener with mastic coating which acts as a sealant at the junction of the screw and the metal framework and profiled sheet to prevent ingress of moist air and also to serve as a protective coating against galvanic corrosion of the fastener. The mastic coating is applied to the fasteners either by dipping them point first into a supply or by rolling a band of mastic around the screw thread.

Having applied the mastic, the screws are then passed into an infra-red conveyor oven rapidly to cure an outer layer to form a skin and subsequently cooled in an air blast or water quenched.

If the fasteners are coated and packed without this preliminary curing step they stick together and form an unusable mass. This process is very sensitive to temperature and the time of curing. In addition since the resin is partially cured at the skin, curing or cross-linking of the remainder of the mastic continues very slowly and this means that the product has only a limited shelf-life.

US-A-4,428,982 discloses a method of making a screw threaded fastener including the steps of depositing a fluid locking material in the threaded portion of the fastener, applying a fluid film forming material over the locking material and applying a film activating material to convert the fluid film forming material to a thin continuous non-tacky protective film.

According to a first aspect of the present invention a method of making a screw threaded fastener includes the step of applying a mastic covering to a screw threaded portion of the fastener, and is characterised in that the method further comprises the step of applying a non-sticky waxy protective coating to the outside of the mastic to prevent the fasteners sticking together during handling and packaging.

Preferably the waxy protective coating is applied to the outside of the mastic by dipping or spraying.

According to a second aspect of this invention, a screw threaded fastener includes a mastic covering around a screw threaded portion of it and is characterised in that it also includes a waxy coating covering the outside of the mastic to prevent the fastener sticking to similar fasteners during handling and packaging.

Preferably the waxy coating is impervious to the transmission of solvents from the mastic to the atmosphere, the transmission of gas such as oxygen which reacts with the mastic, and to the transmission of ultra violet light. In this way the waxy coating not only prevents fasteners sticking to one another but also protects the mastic covering from deterioration and thus increases the shelf-life of the fasteners.

According to a third aspect of this invention a screw threaded fastener includes a drill point and a waxy material coating the drill point.

We have found that the application of a waxy coating material to the drill point acts as a lubricant as the drill point enters an underlying purlin and, even if the fastener is zinc coated, the insertion of the fastener is facilitated.

Preferably the waxy material has a melting point above 50°C and it is particularly preferred that its melting point is above 60°C. Preferably the waxy material also has a low shrinkage factor so that it does not shrink and crack to expose the mastic beneath. Examples of suitable waxy materials are microcrystalline waxes, and a blend of a microcrystalline wax and a wax known as Epolene. Such a material sticks well to the drill point and screw thread and resists being displaced by centrifugal action so that it acts as a lubricant throughout the fastener driving operation

Preferably the mastic covering is a non-curing type of mastic such as a general purpose butyl rubber based sealant or a silicone based sealant such as that sold under the trade name of Silite. It may also be of the curing type such as an epoxy based plastic resin material sold under the Registered Trade Mark TENABOND. The mastics may include corrosion resisting fillers such as zinc, aluminium or magnesium to protect steel against galvanic action by providing a sacrificial anode.

The mastic covering may be applied in generally the same way as that described above. Alternatively, it is applied by dipping or spraying but preferably the fastener is inserted into a mould and then the mastic is injected into the mould cavity and is formed around the fastener.

In the case of small diameter fasteners including a drill point for drilling through thick metal it is desirable that the drill point flutes are not blocked or obstructed by the mastic to maintain drilling performance. In the past this has been achieved by rolling the mastic onto the fastener. However, in a preferred method in accordance with this invention, the drill point of the fastener is initially coated with a preliminary waxy coating before the mastic covering is applied. The mastic does not stick to the preliminary waxy layer, it only sticks to the parts of the fastener not wax coated. The wax on the drill point of the fastener can then either be left in position or it can be removed by dipping the drill point of the finished product into a hot oil bath to leave the point clean. An outer waxy layer is then applied over the mastic covering and the drill point. This method avoids rolling the mastic on to the fastener and avoids drill point contamination during application of the mastic. The preliminary waxy coating and/or the waxy layer acts as a melting lubricant on driving the fastener.

The proposed invention requires less complicated mechanisation and there is no need for an accurately controlled conveyor oven and thus the equipment is more compact and less difficult to control.

Preferably the or each waxy coating is applied with the waxy material heated above its melting point. Preferably the fasteners are subjected to a water or forced air quench after the or each application of the waxy material to ensure that the material has cooled sufficiently to form a hard coating before adjacent fasteners come into contact with one another. Multiple layers of mastic may be built up one on top of the other, or different materials be located at different locations along the fastener by repeating the mastic application steps outlined above.

Particular examples of screw threaded fasteners in accordance with this invention will now be described with reference to the accompanying drawings, in which:-
Figure 1 is a partially sectioned side elevation of a first example;
Figure 2 is a partially sectioned side elevation of a second example;
Figure 3 is a partially sectioned side elevation of a third example; and,
Figure 4 is a partially sectioned side elevation of a fourth example.

In the first example a fixing screw 1 has a domed head 2, a pointed self-drilling point 3 and a screw-threaded portion 4. Such screws are typically used with clamping plates to fix insulating material to a thin underlying metal sheet. The lower portion of the screw thread 4 and drill point 3 are dipped at room temperature into a mastic such as a general purpose butyl sealant type ID152 marketed by Induseal Developments. This provides a mastic coating 5 around the drilling point 3 and the lower portion of thread 4 of the screw 1. The screws are subsequently dipped in a microcrystalline wax type 180 MH manufactured by Witco Corp. of USA, and distributed by Eggar, of Theale, Berkshire, U.K. having 2% of a modifier wax known as Epolene Cl6 or NN34 manufactured by Eastman Kodak Products Inc. added to it. The wax is held at a temperature of 120°C. The screws are removed from the wax bath and dipped into cold water to cool the wax to below its melting point of 60°C to form a set non-sticky coating 6 over the outside of the mastic 5. Typically the fasteners 1 are conveyed by a belt conveyor which engages beneath their heads 2 and leads them successively through a bath containing the mastic, a bath containing the molten wax and the water quench.

The second example of screw threaded fastener in accordance with this invention 10 includes a hexagon head 11, a drill point 12 and a screw thread 13. The basic fastener is of the type is sold by ITW Buildex under their registered trade mark TEKS. The drill point 12 is dipped into a first bath containing molten wax. After removal from the bath the fastener 10 is cooled by an air quench to cool the wax adhering to the drill point 12 to provide a solid wax coating 14 on the drill point 12. The fastener 10 is then dipped into a bath of mastic and withdrawn. The mastic does not adhere to the wax coating 14 but does adhere to the non-coated lower portions of the screw thread 13 to provide a band of mastic material 15 on the lower screw threaded portion of the fastener. The preliminary wax coating 14 may optionally be removed by dipping the drill point 12 in a hot oil bath. The fastener 10 is subsequently dipped in a molten bath of micro-crystalline wax type 180 MH having 2% of a modifier wax known as Epolene added to it. The wax is held at a temperature of 120°C. This provides a wax coating around the outside of the mastic 15 and the preliminary wax 14 where this is retained. This outer wax coating is cooled to below its melting point by an air or water quench. Again the fastener will typically be conveyed by a conveyor belt engaging beneath its head 11 whilst it is conveyed between the various baths and quenches. The preliminary wax coating 14 and/or wax coating 16 typically melt as the drill point 12 of the fastener drills through a steel purlin in use to provide a lubricant.

The third example is generally similar to the second example but, in this example the drill point 12 is subsequently dipped into a hot oil bath to remove both the preliminary wax coating 14 and the outer wax coating 16 from the drill point to leave the drill point 12 and its flutes completely free from wax.

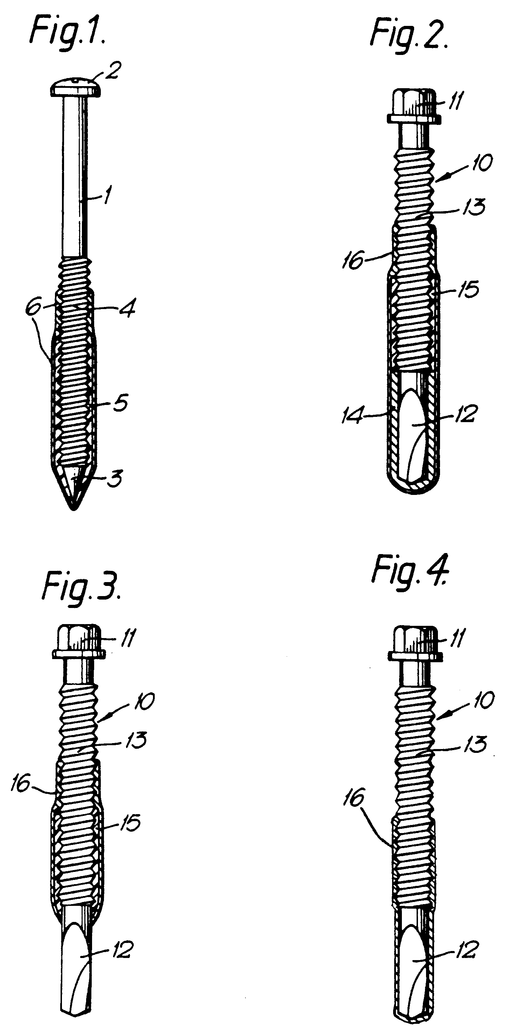

The fourth example shown in Figure 4 comprises a fastener 10 similar to that in the second and third example. The fastener is zinc plated to enhance its corrosion resistance. The drill point 12 and the lowest turns of the screw thread 13 are coated with wax 16 by being dipped into a molten bath of micro-crystalline wax type 180MH and 2% of Epolene held at a temperature of 120°C. On subsequent cooling by an air or water quench the wax 16 solidifies to form a solid coating.

On driving a fastener in accordance with the first, second and fourth examples, the heat generated by the tip of the fastener in penetrating an underlying purlin melts the wax 16 and it acts as a lubricant for the subsequent self tapping operation of the fastener. This facilitates the driving of the fastener and overcomes any tendency of a zinc coating to "ball up" and resist the driving of the fastener. This type of wax 16 clings tightly to the fastener so that it is not displaced by centrifugal action.

## Claims

1. A method of making a screw threaded fastener (1, 10) including the step of applying a mastic covering (5, 15) to a screw threaded portion (4, 13) of the fastener, characterised in that the method further comprises the step of applying a non-sticky waxy protective coating (6, 16) to the outside of the mastic (5, 15) to prevent the fasteners (1, 10) sticking together during handling and packaging.

2. A method according to claim 1, in which the waxy coating is applied to the outside of the mastic by dipping or spraying.

3. A method according to claim 1 or 2, in which the fastener includes a drill point, the drill point is initially coated with a preliminary waxy coating before the mastic covering is applied to prevent the mastic sticking to the drill point.

4. A screw threaded fastener (1, 10) including a mastic covering (5, 15) around a screw threaded portion (4, 13) of it, characterised in that it also includes a waxy coating (6, 16) covering the outside of the mastic (5, 15) to prevent the fastener (1, 10) sticking to similar fasteners during handling and packaging.

5. A method or fastener according to any one of the preceding claims, in which the wary coating (6, 16) is substantially impervious to the transmission of solvents from the mastic (5, 15) to the atmosphere, the transmission of gas such as oxygen which reacts with the mastic, and to the transmission of ultra violet light.

6. A method or fastener according to any one of the preceding claims, in which the mastic (5, 15) includes corrosion resisting fillers such as zinc, aluminium, or magnesium to protect steel against galvanic action by providing a sacrificial anode.

7. A screw threaded fastener (10) including a drill point (12) and a waxy material (16) coating the drill point (12).

8. A method or fastener according to any one of the preceding claims, in which the wary material (16) has a melting point above 50°C.

9. A method or fastener according to any one of the preceding claims, in which the waxy material (16) is a micro-crystalline wax or a blend of micro-crystalline wax and a wax known as Epolene.

## Patentansprüche

1. Verfahren zur Herstellung eines ein Gewinde aufweisenden Befestigungselements (1, 10) mit dem Verfahrensschritt Anwenden einer Mastixbeschichtung (5, 15) auf einen Gewindeabschnitt (4, 13) des Befestigungselements, dadurch gekennzeichnet, daß das Verfahren weiterhin den Verfahrensschritt Anwenden einer nicht-haftenden wachsartigen Schutzschicht (6, 16) auf die Außenseite des Mastix (5, 15) zur Vermeidung des Aneinanderhaftens der Befestigungselemente (1, 10) während des Handhabens und Verpackens aufweist.

2. Verfahren nach Anspruch 1, dadurch gekennzeichnet, daß die wachsartige Schicht auf die Außenseite des Mastix durch Tauchen oder Sprühen aufgetragen wird.

3. Verfahren nach Anspruch 1 oder 2, dadurch gekennzeichnet, daß das Befestigungselement eine Bohrspitze aufweist, wobei die Bohrspitze mit einer vorläufigen wachsartigen Schicht versehen wird, bevor die MastixbeSchichtung erfolgt, um ein Haften des Mastix an der Bohrspitze zu verhindern.

4. Befestigungselement (1, 10) mit einer Mastixbeschichtung (5, 15) um einen Gewindeabschnitt (4, 13), dadurch gekennzeichnet, daß es eine wachsartige Beschichtung (6, 16), welche die Außenseite des Mastix (5, 15) abdeckt, aufweist, um zu verhindern, daß das Befestigungselement (1, 10) an ähnlichen Befestigern während des Handhabens und Verpackens haftet.

5. Verfahren oder Befestiger nach einem der vorhergehenden Ansprüche, dadurch gekennzeichnet, daß die wachsartige Beschichtung (6, 16) im wesentlichen undurchlässig ist für den Übergang von Lösungsmitteln von dem Mastix (5, 15) zur Atmosphäre, für den Übergang von Gas wie Sauerstoff, welches mit dem Mastix reagiert, und für den Durchgang von ultraviolettem Licht.

6. Verfahren oder Befestiger nach einem der vorhergehenden Ansprüche, dadurch gekennzeichnet, daß der Mastix (5, 15) korrosionsbeständige Füllstoffe wie Zink, Aluminium oder Magnesium aufweist, um Stahl gegen galvanische Vorgänge durch Schaffung einer Opferanode zu schützen.

7. Befestigungselement (10) mit einer Bohrspitze (12) und Beschichtung der Bohrspitze (12) mit einem wachsartigen Material (16).

8. Verfahren oder Befestigungselement nach einem der vorhergehenden Ansprüche, dadurch gekennzeichnet, daß das wachsartige Material (16) einen Schmelzpunkt oberhalb 50 °C aufweist.

9. Verfahren oder Befestigungselement nach einem der vorhergehenden Ansprüche, dadurch gekennzeichnet, daß das wachsartige Material (16) ein mikrokristallines Wachs oder eine Mischung von mikrokristallinem Wachs und einem als Epolene bekannten Wachs ist.

## Revendications

1. Procédé de fabrication d'un organe de fixation (1, 10) fileté, comprenant l'étape d'application d'un revêtement en mastic (5, 15) sur une partie filetée (4, 13) de l'organe de fixation, caractérisé en ce que le procédé comprend en outre l'étape d'application d'un revêtement protecteur (6, 16) en cire non-adhésif sur la face extérieure du mastic (5, 15), afin d'empêcher les organes de fixation (1, 10) de coller entre eux durant la manipulation et l'emballage.

2. Procédé selon la revendication 1, dans lequel le revêtement en cire est appliqué sur la face extérieure du mastic, par immersion ou pulvérisation.

3. Procédé selon la revendication 1 ou 2, dans lequel l'organe de fixation comprend une pointe de perçage, la pointe de perçage étant initialement recouverte d'un revêtement en cire préalable, avant d'appliquer le revêtement en mastic, afin d'empêcher le mastic d'adhérer à la pointe de perçage.

4. Organe de fixation (1, 10) fileté, comprenant un revêtement en mastic (5, 15) autour de sa partie filetée (4, 13), caractérisé en ce qu'il comprend également un revêtement en cire (6, 16) recouvrant la face extérieure du mastic (5, 15), afin d'empêcher l'organe de fixation (1, 10) d'adhérer à des organes de fixation analogues durant la manipulation et l'emballage.

5. Procédé ou organe de fixation selon l'une des revendications précédentes, dans lequel le revêtement en cire (6, 16) est pratiquement imperméable à la transmission de solvants par le mastic (5, 15) vers l'atmosphère, à la transmission d'un gaz, tel que l'oxygène, qui réagit avec le mastic et à la transmission d'une lumière ultraviolette.

6. Procédé ou organe de fixation selon l'une des revendications précédentes, dans lequel le mastic (5, 15) comprend des matériaux de remplissage résistant à la corrosion, tels que le zinc, l'aluminium ou le magnésium, afin de protéger l'acier contre une action galvanique, en prévoyant une anode sacrifice.

7. Organe de fixation (10) fileté, comprenant une pointe de perçage (12) et un matériau cireux (16) recouvrant la pointe de perçage (12).

8. Procédé ou organe de fixation selon l'une des revendications précédentes, dans lequel le matériau cireux (16) présente un point de fusion supérieur à 50°C.

9. Procédé ou organe de fixation selon l'une des revendications précédentes, dans lequel le matériau cireux (16) est une cire microcristalline ou un mélange entre une cire microcristalline et une cire connue sous le nom de Epolene.
